# EUROPEAN PATENT SPECIFICATION

(11) **EP 1 759 558 B1**
(45) Date of publication and mention of the grant of the patent: **08.04.2009**
(21) Application number: 05750642.0
(22) Date of filing: 17.06.2005
(51) Int. Cl.: H04Q 11/00

(54) **METHOD AND SYSTEM FOR A DISTRIBUTED WAVELENGTH (LAMBDA) ROUTED (DLR) NETWORK**
VERFAHREN UND SYSTEM FÜR EIN VERTEILTES NETZWERK MIT GEROUTETEN (DLR) WELLENLÄNGEN (LAMBDA)
PROCEDE ET RESEAU DESTINES A UN RESEAU D'ACHEMINEMENT (DLR) A LONGUEUR D'ONDE (LAMBDA) REPARTIE

(30) Priority: 18.06.2004 IE 20040413
(43) Date of publication of application: 07.03.2007
(73) Proprietor: Intune Technologies Limited, Dublin 12 (IE)
(72) Inventor: DUNNE, John, Dublin 12 (IE); MULLANE, Tommy, Dublin 12 (IE); DRURY, David, Dublin 12 (IE)
(74) Representative: Lucey, Michael
(86) International application number: PCT/IE2005/000069
(87) International publication number: WO 2005/125264

(56) References cited:
- EP-A- 0 936 769
- EP-A- 1 370 108
- US-B1- 6 735 393
- WHITE I M ET AL: "EXPERIMENTAL DEMONSTRATION OF A NOVEL MEDIA ACCESS PROTOCOL FOR HORNET: A PACKET-OVER-WDM MULTIPLE-ACCESS MAN RING" IEEE PHOTONICS TECHNOLOGY LETTERS, IEEE INC. NEW YORK, US, vol. 12, no. 9, September 2000 (2000-09), pages 1264-1266, XP000968658 ISSN: 1041-1135
- SHRIKHANDE K ET AL: "CSMA/CA MAC PROTOCOLS FOR IP-HORNET: AN IP OVER WDM METROPOLITAN AREA RING NETWORK" GLOBECOM'00. 2000 IEEE GLOBAL TELECOMMUNICATIONS CONFERENCE. SAN FRANCISCO, CA, NOV. 27 - DEC. 1, 2000, IEEE GLOBAL TELECOMMUNICATIONS CONFERENCE, NEW YORK, NY : IEEE, US, vol. VOL. 2 OF 4, 27 November 2000 (2000-11-27), pages 1303-1307, XP001017293 ISBN: 0-7803-6452-X
- WEN-PING CHEN ET AL: "A packet pre-classification CSMA/CA MAC protocol for IP over WDM ring networks" COMMUNICATION SYSTTEMS, 2002. ICCS 2002. THE 8TH INTERNATIONAL CONFERENCE ON NOV. 25-28, 2002, PISCATAWAY, NJ, USA,IEEE, vol. 2, 25 November 2002 (2002-11-25), pages 1217-1221, XP010629415 ISBN: 0-7803-7510-6
- KYEONG SOO KIM ET AL: "Unslotted optical CSMA/CACprotocol with fairness control in metro WDM ring networks" GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002, IEEE GLOBAL TELECOMMUNICATIONS CONFERENCE, NEW YORK, NY : IEEE, US, vol. VOL. 1 OF 3, 17 November 2002 (2002-11-17), pages 2370-2374, XP010636172 ISBN: 0-7803-7632-3
- WIDJAJA I ET AL: "Study of GMPLS lightpath setup over lambda-router networks" ICC 2002. 2002 IEEE INTERNATIONAL CONFERENCE ON COMMUNICATIONS. CONFERENCE PROCEEDINGS. NEW YORK, NY, APRIL 28 - MAY 2, 2002, IEEE INTERNATIONAL CONFERENCE ON COMMUNICATIONS, NEW YORK, NY : IEEE, US, vol. VOL. 1 OF 5, 28 April 2002 (2002-04-28), pages 2707-2711, XP010589973 ISBN: 0-7803-7400-2

## Description

### Field of the Invention

This invention relates to a communications network and method where wavelength routing/switching is used and the routing/switching function is distributed throughout the network and in particular a communications network ring. The network uses optical wavelength division multiplexing for the provision of bandwidth between nodes in the network.

### Background to the Invention

Telecommunications networks have seen rapid advancement over recent years with the advent of Wavelength Division Multiplexing (WDM) where the capacity of a single fibre can be greatly increased. Typically several (4,16,32... etc) different wavelengths are used to transmit data from point to point or via a ring (such as SONET) multiplying the data carried by fibre by the number of wavelengths used as each wavelength can carry data independently, typically at 2.5Gb/s or 10Gb/s or 40Gb/s.

There has been considerable research in the area of wavelength routing where different wavelengths can be routed through the network to provide connectivity between multiple nodes without the requirement for an optical to electronic to optical conversion. A system of this type is detailed in US patent number US6,735,393 assigned to Telenor. Such systems attempt to reduce the cost of networks as optical to electronic conversion incurs considerable cost. The Telenor patent, which is reliant on rigid time slots allocated in the network to transmit data, describes a version of a passively-routed optical network whereby bands of wavelengths are routed to different output paths at each node within a mesh network. However a problem with this US patent is that it does not address the problem of wavelength collisions and how to drop or add wavelengths and bandwidth allocation at nodes to maintain an acceptable Quality of Service (QoS) in the network, which can be a set of single add-drop type nodes on a ring network using wavelength routing. The Telenor patent is all about how to physically connect up the right elements in a mesh network to allow for a wavelength routing network to be constructed including a control plane above the physical layer.

Also in telecommunications networks the type of data that such networks carries has been changing. Traditionally they were used for voice circuits, which require a link to be set up between two points on the network for the duration of the voice call. Since the advent of the internet telecommunications networks now carry data packets from a computer to another computer which has a very different demand requirement. Computer networks generally operate on a packet basis so that the required data is sent without the requirement for a dedicated link to be established for a period of time. Typically Time Division Multiplexing (TDM) access type systems are used for voice networks, which are very inefficient for data networks. Voice data may be converted into packets and transported over the data network provided the data network can guarantee that the packets will reach the destination with low latency. In packet networks routers, for example provided by Cisco, are key systems that route packets over the network along the various paths available. These are typically electronic and may have optical inputs but the routing is performed electronically. A problem with these routers is that they are becoming a bottleneck in an ever increasing data capacity network.

There is a need to provide an optical network and method that can perform routing functions without the requirements of an electronic router and any optical to electronic to optical conversions to overcome the above problems and ensure that the network can operate at maximum efficiency.

A published paper entitled "Experimental Demonstration of a Novel Media Access Protocol for HORNET: A Packet-Over-WDM Multiple-Access MAN Ring" by White et al discloses a fast tunable transmitters and a novel media access control scheme to realise a packet over WDM multiple access ring architecture.

Another published paper entitled "CSMA/CA MAC Protocols for IP-HORNET: An IP over WDM Metropolitan Area Ring Network" by White et al describes and evaluates novel and practical carrier sense multiple access with collision avoidance MAC protocols for IP over WDM ring networks that handle variable size IP packets without complex variable optical delays.

### Object of the Invention

The object of the present invention is to provide a method and network system architecture for the implementation of an optical network which allows access methods and efficient and simple provision of bandwidth between nodes in the network.

### Summary of the Intention

Accordingly the present invention, as set out in the appended claims, describes a network and method having a ring system with a plurality of nodes and an interconnection means to allow information to be communicated between the nodes of the network using packets of data in a novel and efficient manner. Each node in the network system can access the network in an asynchronous mode, which means that each node may transmit onto the network whenever capacity is available thus improving the overall efficiency of the network. This access scheme is achieved by enabling each node in the network to monitor the traffic on the network before making a decision on how to access the network. To realise this type of access scheme, the traffic on the network is sent through a delay mechanism after the traffic is monitored at each node and before new information is transmitted onto the network.

The present invention also describes a method for wavelength collision avoidance, whereby the network traffic is monitored before it reaches the new transmission point or node in the network, thus the new transmission can be temporarily stopped to avoid a collision on the particular channel being accessed. When the contentious traffic has passed, the transmission that was temporarily stopped can then continue. In an optical system, this means that the same two wavelengths will not appear in any given node at the same time.

Each node may only access one channel on the network at any one time or optionally a node may have multiple wavelength sources to allow the node to access multiple wavelengths/channels at the same time in the same part of the optical fibre causing wavelength collision.

To ensure fairness of access on the network, each receiving node monitors the number of other nodes trying to send information to it. If the receiving node perceives that a plurality of nodes are trying to communicate to it, it can send a push-back signal to some or all of the nodes on the network to tell them to back off from the level of access that they were using at that time in attempting to transmit to the receiving node. This scheme enables capacity in the network to be distributed fairly among the nodes by implementing an algorithm.

Because collisions are managed real time, capacity can be adjusted for demand in a reactionary way rather than trying to foresee it. Each node can look after the management of demand to it by itself so many independent parallel decisions on bandwidth can be made, each wavelength looks after itself on a wavelength basis, because there is no need to take account of two wavelengths appearing at any destination node as an optical filter in the receiver subsystem of the node automatically selects a unique wavelength to drop at that point.

The present invention allows for no need to use a fixed packet length for transmission of data on the network because the network can use an asynchronous access scheme. Each node can therefore make a decision based on traffic profile as to what length packet is suitable over each wavelength transmit. Each receiving node can receive different length packets.

The invention provides packets to be transmitted onto the network to be prioritised in order to ensure a Quality of Service (QOS) to the user of the network. In this case, a lower priority transmission may be temporarily stopped in order to send a higher priority transmission. As the network has an asynchronous access method therefore the prioritisation of packet transmission can take effect as soon as the decision is made and the transmitting node does not have to wait until a time slot, which is a limitation of TDM, becomes available or does not have to wait until a current time slot for the lower priority traffic is ended.

Bandwidth allocation and bandwidth reservation are achieved by the invention through a combination of the quality of service function and the inherent statistical performance of the system as opposed to a network-wide bandwidth allocation algorithm whereby specific time slots are used to allocate fixed bandwidth services. This method for bandwidth allocation greatly increases the flexibility of the network to cope with a multitude of traffic profiles and to improve the scalability over time slotted architectures.

The invention provides resilience, recovery and protection on the network is achieved by the use of a dual connection between any two nodes whereby the data going from one node to the next is sent in two directions onto the network. When one network route is disabled, the data may still get to its destination on the other route. This can be implemented by having two fibre channels in the system, one for clockwise communication and another of anticlockwise communications around the ring, if a break in the fibre occurs the other direction can be used to access the node.

The invention provides traffic management and adaptability to traffic type is achieved by varying the mega packet length being transmitted. As the network operates in asynchronous mode the network copes very well with this type of adjustment. This means that virtual sub networks can be set up and work equally well over the same system and support either always on type of connections or smaller mega packets using the same transport means. The underlying transport layer is transparent to data traffic type.

The invention additionally provides for the addition of new nodes seamlessly by inserting the node in the optical fibre path between two other nodes and the ring can then carry on uninterrupted with a new wavelength that is currently not being used in the network assigned to the new node.

Ideally there is provided a control unit associated with each node comprising monitoring means to monitor available wavelength capacity in the network. Preferably the control unit comprises processing means to control wavelength transmit from the node said control is carried out during a delay period introduced by said delay mechanism. Suitably the control unit comprises processing means to decide which wavelength to transmit and configure switching time of the transmission.

In another embodiment the control unit at a first node determines whether transmit wavelengths upstream at a second node in the network are still transmitting comprises means to abort transmit wavelengths from said first node until the transmit wavelengths at said second node is completed. The first node may comprise means to transmit wavelength at different wavelengths to said transmit wavelengths from said second node during the period when said second node is transmitting.

Ideally there is provided means to detect the wavelength being used on the input to any node in the network. Desirably a maintenance channel is added to the network ring by each node.

Desirably a node receiving transmit wavelengths comprising means to detect the number of transmitting nodes trying to communicate with said receiving node and means to determine whether said receiving node is capable of receiving all transmit wavelengths from said transmitting nodes.

Suitably there is provided means to implement a fairness algorithm for bandwidth allocation in the network when said receiving node is incapable of receiving all transmit wavelengths from said transmitting nodes.

A push-back signal may be sent in response to said fairness algorithm from said receiving node to said transmitting nodes. Ideally the push-back signal causes each or some of said transmitting nodes to reduce the amount of time each of said transmitting nodes is trying to access said receiving node.

Preferably the fairness algorithm determines the priority of each of said transmitting nodes and allows the transmitting node with the highest priority transmit first to the receiving node before the transmitting nodes of lower priority in a hierarchical order. Suitably the push-back signal is sent over a dedicated messaging channel wavelength.

In another embodiment of the invention there is provided means for at least one or at each node for implementing a quality of service (QoS) requirement. Preferably decision means are provided at a node to prioritise data to be transmitted onto the network ring over a transmit wavelength from said node to maintain QoS requirements. Ideally during transmit wavelength of data of a particular QoS at a node the invention provides means to abort said data transmit wavelength when said node detects data for transmission at said node having a higher QoS requirement.

Ideally an optical channel monitor is used to detect the wavelengths active on the input to any node.

Suitably a filter means which drops off a small percentage of the transmit wavelength to optically monitor wavelength activity in the ring network.

Preferably tones are used to detect the wavelengths active on the input to any node. The tones, which are present in optical networks, can be used as an effective parameter to detect active wavelengths in the network.

In another embodiment of the present invention the network is configured as a mesh with the routing through the mesh dependent on the wavelength of the light signal. This could be the situation where multiple rings are being interconnected. On the interconnecting nodes some wavelengths will be routed to one ring and other to another. Again each node detects what wavelengths are currently present on a line before adding data to that line and again each node stops sending data on a particular wavelength. If a node further up the line begins using that wavelength, thereby avoiding a collision. This can be expanded so that any connection topology can be used with the routing at the nodes dependent on the wavelength of the light.

In another embodiment a ring of nodes is again present with each node detecting the presence or absence of other wavelengths before choosing a wavelength to send so as to prevent collisions. In this embodiment RF tones are used as an out of band signalling technique to convey information on what wavelengths are currently being used in the ring to prevent collisions. This can be accomplished by tapping off a small amount of signal and doing some simple frequency analysis of the light to determine what RF tones are present. Additionally other information can be conveyed on this out of band control channel so that a separate control channel with dedicated fixed frequency laser is not required.

In another embodiment of the present invention frequency shift keying (FSK) of the optical signals is used as an out of band signalling technique to denote the presence or absence of the wavelength channels in the system and other control information. This control information may be sent prior to a change in wavelength to allow the downstream nodes sufficient time to free the soon to be used wavelength to prevent collisions. In addition the information on the FSK signal may be coding in some fashion. For example by using a PN sequence such as those used in a Code Division Multiple Access (CDMA) network to make detection of the individual signals easier. In another embodiment multicasting of the data is accomplished by means of a bypass circuit in each node. This bypass circuit allows data that is received by the node to be routed directly through to the transmitter in the same node in a seamless and low latency manner and sent on to another node that is part of the group of nodes in the multicasting. This allows the multicast signal to be sent to multiple nodes with little extra latency then sending a regular signal.

There is also provided a computer program comprising program instructions for causing a computer program to carry out the above method which may be embodied on a record medium, carrier signal or read-only memory.

### Brief Description of the drawings

These and other features of the present invention will be better understood with reference to the following drawings in which :
Figure 1 is an exemplary embodiment of the invention showing an implementation of a network architecture and a typical node of the network;
Figure 2 shows an embodiment of the invention with two counter propagating rings;
Figure 3 shows an implementation of the receiver part of each node;
Figure 4 shows an implementation of the transmit part of each node.

### Detailed Description of the Drawings

The invention will now be described with reference to exemplary embodiments thereof and it will be appreciated that it is not intended to limit the application or methodology to any specific example. The techniques used by the method of the present invention are specifically provided to enable the formation of an optical network where a plurality of nodes can pass data or other such information between the nodes. This system provides a communications network which can be used for voice, data, multimedia and any other such information to be transmitted or distributed.

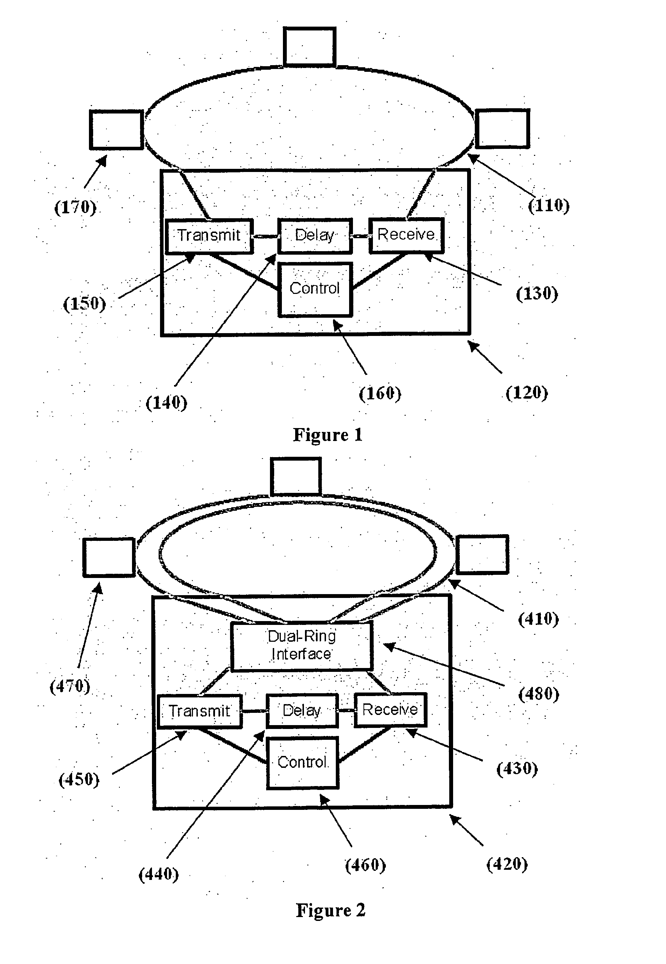

The methodology of the present invention will now be described with reference to Figure 1 where an optical fibre 110 is used to connect a plurality of nodes 170 in a typical ring network arrangement. One network node is expanded to show its component functionality 120. On the input fibre transmit is processed by the Receive unit 130. This unit receives one specific wavelength (the drop wavelength) and allows all other wavelength to pass trough (Pass wavelengths). The specific received wavelength received data packets from the other nodes in the network. A delay mechanism 140 is implemented between the receive 130 and transmit 150 where the wavelengths the receive unit has allowed through are delayed. This is implemented by means of a length of optical fibre. The transmit unit then adds a new wavelength (Add wavelength) to the ring with data. A control unit 160 is used between the receive 130 and transmit 150 unit to configure the drop and add wavelength.

Another implementation uses two counter propagating rings as in figure 2 arranged in an optical fibre dual ring 410. Each ring is similar to the ring shown in figure 1 but the light path is propagating transmit wavelength in opposite directions. In this embodiment each node 420, 470 comprises a transmitter 450 and a receiver 430 which are linked through a delay mechanism 440 and all controlled by control unit 560. A dual ring interface 480 allows for transmit wavelengths to be transmitted and received in opposing directions.

Typically there are up to, and above, 100 wavelength channels available as over 40nm (5THz) from 1528 to 1568nm are available and a wavelength spacing of 0.4 nm (50GHz) can be used. Alternatively 80nm can be used with a channel spacing of 0.2nm providing 400 different wavelengths. Even more channels may be used by extending the wavelength range or making the channel spacing smaller.

As each node adds a wavelength to the ring and each node receives one wavelength on the ring, by means of the node selecting the wavelength it can choose which destination node to receive the data modulated on the wavelength, i.e. if node A is configured to receive wavelength x and node B transmits data on wavelength x, any data that node B places on wavelength x will be received by node A, hence a communications channel is set up between the two nodes. This operation is similar for each node on the network, therefore at any one time on the network of N nodes there are N possible connections between nodes. Different wavelengths can be transmitted at the same time at the node. The different wavelengths can be visually represented as a number of colours depending on the wavelength value. If the node can change the wavelength of it's add wavelength it can communicate to different nodes. By use of a switching element where this wavelength can be switched the node can switch between modes and provide a reconfigurable network. In this case a packet of data can be sent from one node A to any other node, then the add wavelength can be changed and node A can then send a packet to another node in the network where a packet is a bundle of data with a start and a stop.

The network requires that only one node on the network can add the same wavelength at any one time to avoid wavelength collisions, which will corrupt the data. A collision avoidance scheme according to one aspect of the invention is described below.

An advantage of the present invention is that each node in the network can monitor the number of wavelengths currently used in the network as these are measured in the receiver unit. The control unit 160 continually monitors at a node all the wavelength transmit data in the network and then can then decide which wavelengths are available for access on the network and select an add wavelength for transmit on the network to enable access. As each node operates asynchronously from the other nodes on the network this functionality means that each node can operate independently and monitor the available wavelength independently without the need for central control. The delay between the receive and transmit allows time for detection of the incoming wavelength, processing by the control unit 160 to decide which wavelength to use and switching time to configure the output wavelength.

If a node wishes to access a wavelength and that wavelength is not currently being used, it may do so. However, during the course of a transmission on this wavelength, the node may monitor the appearance of the wavelength from a node upstream. Before the delayed signal interferes with the transmission currently going on, the wavelength is aborted in order to let the upstream wavelength signal pass through. While this is happening, the node can transmit on other wavelengths while waiting for the upstream node to finish transmission, thereby ensuring maximum use of the transmitter in the node.

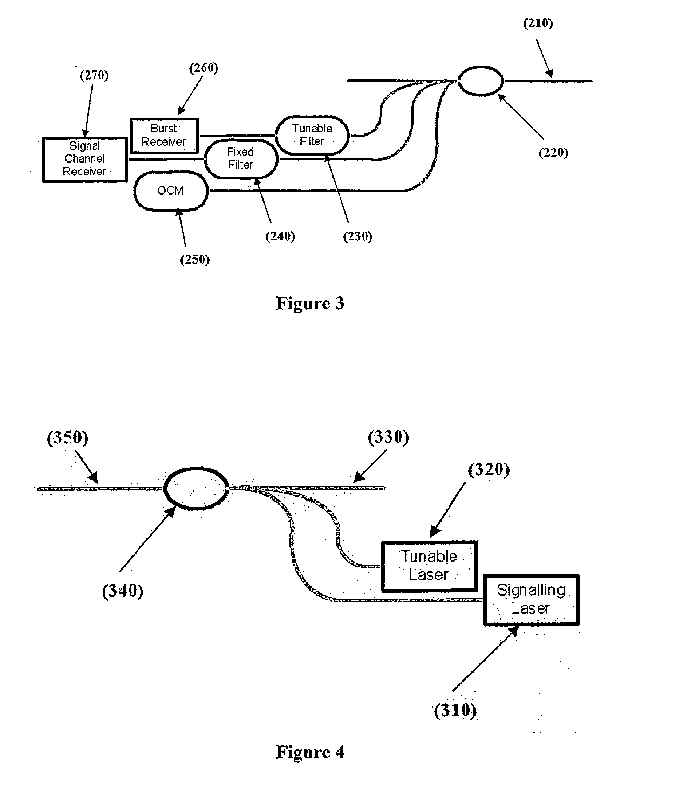

Figure 3 shows an example of the receiver part of the node where the incoming wavelength come in a fibre 210, a splitter 210 is used to tap part of the signal into the receiver while the rest passes through to the delay. The taps are used for a burst receiver 260 to receive data. A tunable filter is used to detect one wavelength only. A signal channel is received by using a fixed filter 240 and a receiver 270. An optical channel monitor 250 also receives a tap of the signal to determine which wavelengths are active in the network.

It will be appreciated that other arrangements can be used such as a circulator with a grating, thin film reflectors, optical multiplexors and de-multiplexors, arrayed waveguides (AWGs), but not limited thereto.

Figure 4 shows an example of the transmit part of the node. The optical fibre from the delay element 330 is combined in a combiner 340 with the output of a tunable laser 320 and a signalling laser 310. The tunable laser can use a machzendler or other modulator to put data on the output, the signalling laser can use a modulator or direct modulation. It will be also appreciated that other configurations are possible such as a star combiner or coupler, AWG, and other filter elements can be used to combine the output of the tunable laser, signalling laser to the output path of the node.

Signalling channel is used to pass information between nodes. This data can pass push-back data for nodes. Also notification of breaks or lost data and each node can then take appropriate action to use an alternative path. Also configuration information such as when a new node is added to the network. Also it can be used for power normalisation. Each node can notify other nodes when the optical power received is outside a required range and the transmitting node can then either increases or decrease the output of its laser when it is transmitting to that node. In this way the output power of the laser adding the wavelength to the node can compensate for different link losses through the system. In other words if node A transmits to node B and they are adjacent it node A configures is laser to low output power, If node A transmits to node C which is on the opposite side of the ring, it adjusts the laser power up to account for the extra losses. These losses can be made up of other nodes in the network, fibre, connector and splicing losses.

As each node has a signalling laser, which provides a dedicated signal channel they can all operate at different wavelengths but in one embodiment they should all operate at the same wavelength, which is out of the range of wavelength channels used for data transmission. There are examples of two methods of implementing the signalling channels below:
1. Each node uses the signalling channel to send data to the next node in the ring only. It is up to the next node to relay data received to other nodes and around the ring
2. Each node can broadcast to all other nodes by use of the signalling channel and an arbitration scheme is used to allow each node a time to communicate with all other channels, e.g. a round robin, or token method.

It should be noted that other methods exist to implement signalling and the description of methods of implementing signalling is not limited to the description above.

It will be appreciated that numerous system arrangements can be employed to carry out the invention, as will be apparent from the following description. In another embodiment there is provided optical fibre ring network using Wavelength Division Multiplexing (WDM) where each data carrier signal is identified by the wavelength of light used. Each node is connected to the ring so that the fibre goes in through the node and back out onto the ring. Each node transmits data onto the ring using a laser and the laser is tunable to differing wavelengths in the WDM system. Each wavelength will address a different node in the system so that when data is to be sent to a destination node, the wavelength that corresponds to that destination node is stored in a lookup table and the transmitting laser is set to that wavelength before transmission of the data takes place.

Each node has an optical add drop filter which drops a single wavelength from the optical fibre and also drops off a small percentage of the total signal in order to optically monitor the existence of wavelengths on the ring which is performed in a channel monitor. The data is recovered from the dropped optical channel using a burst mode receiver.

This receiver is trained to synchronise itself onto the data in any one burst of data and is capable of adapting its lock-in criteria for each individual burst of data it receives.

The optical channel monitor then passes on information about which wavelengths are currently in-use and which wavelengths are not to a central control unit and scheduler. Each node itself has an electronic interface which can receive packets of data ordered so that the first packet is intended to go out into the network first, the second to go out next and so on. Each packet sent into the node is given a destination node address telling the node where to send the packet.

Packets are placed into queues, with a queue existing for each possible destination node and for each quality of service type (so if there were n nodes and m quality of service types, there would be n x m queues).

According to a scheduler algorithm, and from the information provided by the channel monitor, batches of packets in one queue are sent out onto an available wavelength channel in a mega-packet burst. A preamble data set is placed at the front of this mega-packet, and a termination sentinel is placed at the rear of the this mega-packet.

The transmitting laser is switched to the correct wavelength and the data is modulated onto the laser and sent out onto the ring. If the optical channel monitor detects that another node upstream is sending information on the same wavelength that the transmitter is currently using, then a signal is sent to the transmitter to abort the transmission.

The aborted mega-packet is then terminated with a sentinel which lets the receiving node know that this mega-packet has been aborted. When the optical channel monitor sees that the mega-packet on the ring is ended, it tells the transmitter to resume sending the mega-packet that was aborted. This process is repeated until the mega-packet is fully sent.

The receiving node then receives a series of mega-packets, possibly of different lengths. The receiving node knows from the sentinels attached to the end each mega-packet whether the mega-packet was (a) part of an aborted mega-packet or (b) how many different nodes are attempting to send data to it at the same time.

The receiving node then uses a messaging channel wavelength to send a back-off or push-back signal to all the nodes that are trying to send data to it.

This back-off signal is received by all nodes trying to send data, and each of these nodes then reduces the amount of time it is trying to send data to that receiving node by means of a fairness algorithm. For example, it may back-off by 50% which means that it only tries to access that wavelength 50% of the time that it was previously trying to do this.

Each transmitting node must also have the ability to assess whether there is a mega-packet of higher priority ready to transmit onto the ring. If this is true at any time, then the current transmission can be aborted in a similar manner as described above.

The higher priority mega-packet is then transmitted and when it has been transmitted the node then returns to the lower priority aborted mega-packet and transmits more of that packet. The function of the scheduler is to minimise the length of the queues that it has waiting to be transmitted.

A scheduling algorithm will be used to allow any single node to adapt its scheduling algorithm based on recent history of data traffic type. Adaptive behaviour may include variation of the mega-packet length and variation of how the next transmission wavelength is selected.

A single wavelength laser is also present in the transmitting subsystem of the node. This laser transmits data from one node the next adjacent node on the ring in either direction. The laser is separate from the tunable laser and only transmits supervisory or management signalling data over a dedicated wavelength channel.

For example the laser will use a wavelength outside of the band of wavelengths used in the main WDM system on the ring. Information such as the number of nodes on the network and the lookup table that relates each node to a single wavelength is passed around the network.

Back-off signals are also sent around on this wavelength where possible contention has been found by any one receiving node. For faster back-off signalling, the receiving node may simply address each of the nodes trying to send data to it, using the wavelength of that node in a normal way.

The present invention is self adapting and can be used in different ways by different layer systems and different Network Interface Cards (NICs) within each node. So a family of NIC cards for different applications can all connect into the same physical network and the system adapts itself to manage the bandwidth and changing traffic profiles.

New nodes can be added to the network by first breaking one of the rings and adding in the node and then breaking the other and adding in the node, and in each case, the ring should be able to continue uninterrupted.

By using several of these types of systems configured together, a delivery network for video-on-demand can be created which allows both downstream and upstream communication between a multitude of end-users and a single content server.

It will be appreciated that several of these types of systems configured together to provide a large connection of multiple rings to be created to interconnect banks of computer processors and thus created a larger computer processor with multiple parallel virtual circuits and connections between individual processors.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

The invention is not limited to the embodiments hereinbefore described but may be varied in both construction and detail.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. An optical fibre wavelength routed network comprising:
a plurality of nodes (120) on a network ring where each node is adapted to drop and add a wavelength;
control means (160) for controlling the wavelength to be transmitted on the network ring;
**characterized by** access means for each node (120) for enabling a node to transmit the wavelength onto the network ring; and
at least one node of the plurality of nodes (120) being for providing batches of packet data sent out onto an available wavelength channel in a mega-packet burst transmitted on the network ring, said mega-packet comprising a preamble data set placed at the front of said mega-packet, and a termination sentinel placed at the rear of the mega-packet carrying the information whether the mega-packet is part or not of an aborted mega-packet whereby wavelength collisions with transmit wavelength from other nodes (120) are avoided in the network.

2. A network as in claim 1 where at least one one of the plurality of nodes (120) is like adapted to operate in an asynchronous mode with at least one or all of the other nodes in the network.

3. A network as claimed in claims 1 or 2 wherein each node (120) provides a delay between the detection of active wavelengths on the input to the node and the transmit of wavelengths at the output of the node (120) .

4. A network as claimed in claim 3 wherein the transmit wavelengths are routed through a delay mechanism (140) after being detected at the node and before a decision is made to add a new transmit wavelength to the network.

5. A network as claimed in any preceding claim wherein there is provided a control unit (160) associated with each node (120) comprising monitoring means to monitor available wavelength capacity in the network.

6. A network as claimed in claim 5 wherein the control unit (160) comprises processing means to control wavelength transmit from the node (120) and said control is carried out during a delay period introduced by said delay mechanism (140).

7. A network as claimed in claims 5 or 6 wherein said control unit (160) comprises processing means to decide which wavelength to transmit and the switching time to configure the transmit wave length.

8. A network as claimed in any of claims 5 to 7 wherein said control unit (160) at a first node (120) is adapted to determine whether transmit wavelengths upstream at a second node in the network are still transmitting and comprises means to abort transmit wavelengths from said first node (120) until the transmission of wave lengths at said second node is completed.

9. A network as claimed in claim 8 wherein said first node (120) comprises means to transmit (150) wavelengths at different wavelengths to said transmit wavelengths from said second node during the period when said second node is transmitting.

10. A network as claimed in any preceding claim comprising means to detect the wavelength being used at the input of any node (120) in the network.

11. A network as claimed in any preceding claim wherein a maintenance channel is added to the network ring by each node (120).

12. A network as in any preceding claim where the output power of a transmit channel to transmit different wavelengths is configured to suit the power loss of the network to a particular destination node.

13. A network as in any of the preceding claims where a tunable laser (320) is used as the transmit wavelength.

14. A network as in claim 13 where the output of the tunable laser (320) is blanked while switching so that any other wavelength channels are not effected by the changing wavelength of the laser.

15. A network as in any of the preceding claims where an array of fixed wavelength lasers are used to generate the add wavelength for each node.

16. A network as claimed in any preceding claim with a node receiving transmit wavelengths comprising means to detect the number of transmitting nodes trying to communicate with said receiving node and means to determine whether said receiving node is capable of receiving all transmit wavelengths from said transmitting nodes.

17. A network as claimed in claim 16 comprising means to implement a fairness algorithm for bandwidth allocation in the network when said receiving node is incapable of receiving all transmit wavelengths from said transmitting nodes.

18. A network as claimed in claims 16 or 17 wherein a push-back signal can be sent in response to said fairness algorithm from said receiving node to said transmitting nodes.

19. A network as claimed in claim 18 wherein said push-back signal causes each or some of said transmitting nodes to reduce the amount of time each of said transmitting nodes is trying to access said receiving node.

20. A network as claimed in claim 18 wherein said fairness algorithm determines the priority of each of said transmitting nodes and allows the transmitting node with the highest priority to transmit first to the receiving node before the transmitting nodes of lower priority in a hierarchical order.

21. A network as claimed in any of claims 18 to 20 wherein said push-back signal is sent over a dedicated messaging channel wavelength.

22. A network as claimed in any of the preceding claims comprising means for at least one node or at each node for implementing a quality of service, QoS, requirement.

23. A network as claimed in claim 22 wherein decision means are provided at a node to prioritise data to be transmitted onto the network ring over a transmit wavelength from said node to maintain QoS requirements.

24. A network as claimed in claims 22 or 23 comprising means during transmit wavelength of data of a particular QoS at a node to abort said data transmit wavelength when said node detects data for transmission at said node having a higher QoS requirement.

25. A network as claimed in any of the preceding claims where an optical channel monitor is used to detect the wavelengths active at the input of any node.

26. A network as claimed in claim 24 further comprising a filter means which drops off a small percentage of the transmit wavelength to optically monitor wavelength activity in the ring network.

27. A network as claimed in any of the preceding claims where an Array Wave Guides, AWG, and photodiodes are used to detect the wavelengths active on the input to any node

28. A network as claimed in any of the preceding claims where the presence or absence of Radio Frequency, RF, tones are used to detect the wavelengths active at the input of any node.

29. A network as claimed in any of the preceding claims where a Frequency shift keyed, FSK, signal, or other out of band signal, is used to convey information on which wavelengths are currently active in the network and transmit other control information.

30. A network as claimed in any of the preceding claims where the add wavelength of any node is not a wavelength detected at the input of the node.

31. A Distributed Wavelength, Lambda, Routed, DLR, network as claimed in any preceding claim.

32. A method of controlling traffic data for wavelength transmit in an optical fibre wavelength routed network comprising the steps of:
providing a plurality of nodes (120) on a network ring where each node can drop and add a wavelength;
controlling the wavelength to be transmitted on
the network ring; and
**characterized by** the steps of enabling each node (120) to transmit the wavelength onto the network ring; and providing at least one node of the plurality of nodes claims (120) with batches of packet data sent out onto an available wavelength channel in a mega-packet burst transmitted on the network ring said mega packet comprising a preamble data set placed at the front of said mega packet, and a termination sentinel placed at the rear of the mega-packet carrying the information whether the mega-packet is part or not of are aborted mega-packet whereby wavelength collisions with transmit wavelength from other nodes (120) are avoided in the network.

33. A method as claimed in claim 32 comprising the further step of operating at least one node in an asynchronous mode with at least one or all of the other nodes in the network.

34. A method as claimed in claims 32 or 33 comprising the step of introducing a delay between the detection of active wavelengths at the input of the node and the transmit of wavelengths at the output of the node.

35. A method as claimed in claim 34 comprising the step of routing the transmit wavelength through a delay mechanism after being detected at the node and before a decision is made to add a new transmit wavelength to the network.

36. A method as claimed in any of claims 32 to 35 comprising the step of monitoring at each node continually the available wavelength capacity in the network.

37. A method as claimed in claim 36 comprising the further step of controlling the wavelength transmit from the node during a delay period introduced by said delay mechanism.

38. A method as claimed in any of claim 32 to 37 comprising the steps detecting at a receiving node the number of transmitting nodes trying to communicate with said receiving node and determining whether said receiving node is capable of receiving all transmit wavelengths from said transmitting nodes.

39. A method as claimed in claim 38 comprising the step of implementing a fairness algorithm for bandwidth allocation in the network when said receiving node is incapable of receiving all transmit wavelengths from said transmitting nodes.

40. A method as claimed in claims 37 or 38 comprising the step of sending a push-back signal in response to said fairness algorithm from said receiving node to said transmitting nodes.

41. A method as claimed in claim 40 comprising the step of causing said push-back signal each or some of said transmitting nodes to reduce the amount of time each of said transmitting nodes is trying to access said receiving node.

42. A method as claimed in any of claims 32 to 41 comprising implementing a quality of service, QoS, requirement means for at least one or each node in the network.

43. A method as claimed in claim 42 comprising the step of deciding at a node to prioritise data to be transmitted onto the network ring over a transmit wavelength from said node to maintain QoS requirements.

44. A computer program comprising program instructions for causing, when are one a computer, to perform the method of any one of claims 32 to 43.

45. A computer program as claimed in claim 44 embodied on a record medium.

46. A computer program as claimed in claim 44 embodied on a carrier signal.

47. A computer program as claimed in claim 44 embodied on a read-only memory.

## Patentansprüche

1. Lichtleiter-Netzwerk mit gerouteten Wellenlängen, umfassend:
- eine Mehrzahl an Knoten (120) auf einem Netzwerkring, wobei jeder Knoten zum Entfernen und Hinzufügen einer Wellenlänge ausgebildet ist;
- Steuermittel (160) zur Steuerung der auf den Netzwerkring zu übertragenden Wellenlänge;
**gekennzeichnet durch**
- Zugriffsmittel für jeden Knoten (120), um einem Knoten die Übertragung der Wellenlänge auf den Netzwerkring zu ermöglichen; und
- wenigstens einen Knoten (120) der Mehrzahl an Knoten, welcher zur Bereitstellung von Sätzen von Datenpaketen vorgesehen ist, welche in einem Megapaket gebündelt an einen verfügbaren Wellenlängenkanal ausgesendet und auf den Netzwerkring übertragen werden, wobei das Megapaket einen am Anfang des Megapaketes platzierten, einleitenden Datensatz sowie eine am Ende des Megapaketes platzierte Schlussmarkierung umfasst, welche die Information trägt, ob das Megapaket Teil eines abgebrochenen Megapaketes ist oder nicht, wodurch Kollisionen von Wellenlängen mit übertragenen Wellenlängen anderer Knoten (120) in dem Netzwerk vermieden werden.

2. Netzwerk nach Anspruch 1, wobei wenigstens ein Knoten der Mehrzahl an Knoten zum Betrieb in einem asynchronen Modus mit wenigstens einem oder sämtlichen anderen Knoten in dem Netzwerk ausgebildet ist.

3. Netzwerk nach Anspruch 1 oder 2, wobei jeder Knoten (120) für eine Verzögerung zwischen der Erfassung von aktiven Wellenlängen am Eingang zu dem Knoten und der Übertragung von Wellenlängen am Ausgang des Knotens (120) sorgt.

4. Netzwerk nach Anspruch 3, wobei die übertragenen Wellenlängen durch einen Verzögerungsmechanismus (140) geroutet werden, nachdem sie an dem Knoten erfasst worden sind und bevor eine Entscheidung gefällt wird, dem Netzwerk eine neue zu übertragende Wellenlänge hinzuzufügen.

5. Netzwerk nach einem der vorangehenden Ansprüche, wobei eine einem jedem Knoten (120) zugeordnete Steuereinheit (160) vorgesehen ist, welche Überwachungsmittel umfasst, um die verfügbare Wellenlängenkapazität in dem Netzwerk zu überwachen.

6. Netzwerk nach Anspruch 5, wobei die Steuereinheit (160) Verarbeitungsmittel zur Steuerung der von dem Knoten (120) übertragenen Wellenlänge umfasst, wobei diese Steuerung während einer durch den Verzögerungsmechanismus (140) ausgelösten Verzögerungsdauer durchgeführt wird.

7. Netzwerk nach Anspruch 5 oder 6, wobei die Steuereinheit (160) Verarbeitungsmittel umfasst, um zu entscheiden, welche Wellenlänge übertragen wird, und die Umschaltzeit auszuwählen, um die zu übertragende Wellenlänge zu konfigurieren.

8. Netzwerk nach einem der vorangehenden Ansprüche 5 bis 7, wobei die Steuereinheit (160) an einem ersten Knoten (120) zur Ermittlung ausgebildet ist, ob zu übertragende Wellenlängen stromauf eines zweiten Knotens in dem Netzwerk weiterhin übertragen werden, und Mittel umfasst, um eine Übertragung von Wellenlängen von dem ersten Knoten (120) abzubrechen, bis die Übertragung von Wellenlängen an dem zweiten Knoten abgeschlossen ist.

9. Netzwerk nach Anspruch 8, wobei der erste Knoten (120) Mittel zur Übertragung (150) von Wellenlängen mit verschiedenen Wellenlängen an die übertragenen Wellenlängen von dem zweiten Knoten während des Zeitraums, in welchem der zweite Knoten überträgt, umfasst.

10. Netzwerk nach einem der vorangehenden Ansprüche, welches Mittel umfasst, um die Wellenlänge zu erfassen, die an dem Eingang eines beliebigen Knotens (120) in dem Netzwerk verwendet wird.

11. Netzwerk nach einem der vorangehenden Ansprüche, wobei dem Netzwerkring durch jeden Knoten (120) ein Instandhaltungskanal hinzugefügt ist.

12. Netzwerk nach einem der vorangehenden Ansprüche, wobei die Ausgangsleistung eines Übertragungskanals zur Übertragung von verschiedenen Wellenlängen derart konfiguriert ist, um den Leistungsverlust des Netzwerks mit einem bestimmten Zielknoten in Übereinstimmung zu bringen.

13. Netzwerk nach einem der vorangehenden Ansprüche, wobei ein abstimmbarer Laser (320) als die zu übertragende Wellenlänge zum Einsatz kommt.

14. Netzwerk nach Anspruch 13, wobei der Ausgang des abstimmbaren Lasers (320) während des Umschaltens ausgeblendet ist, so dass jeder andere Wellenlängenkanal durch die Veränderung der Wellenlänge des Lasers nicht beeinflusst wird.

15. Netzwerk nach einem der vorangehenden Ansprüche, wobei eine Anordnung von festen Wellenlängenlasern zum Einsatz kommt, um die hingefügte Wellenlänge für jeden Knoten zu erzeugen.

16. Netzwerk nach einem der vorangehenden Ansprüche, mit einem Knoten, welcher zu übertragende Wellenlängen empfängt, umfassend Mittel zur Erfassung der Anzahl an übertragenden Knoten, welche versuchen, mit dem empfangenden Knoten zu kommunizieren, sowie Mittel zur Bestimmung, ob der empfangende Knoten im Stande ist, sämtliche zu übertragenden Wellenlängen von diesen übertragenden Knoten zu empfangen.

17. Netzwerk nach Anspruch 16, welches Mittel zur Implementierung eines Fairness-Algorithmus' zur Bandbreitenverteilung in dem Netzwerk umfasst, wenn der empfangende Knoten nicht im Stande ist, sämtliche zu übertragende Wellenlängen von den übertragenden Knoten zu empfangen.

18. Netzwerk nach Anspruch 16 oder 17, wobei als Antwort auf den Fairness-Algorithmus ein Zurückweisungssignal von dem empfangenden Knoten an die übertragenden Knoten gesendet werden kann.

19. Netzwerk nach Anspruch 18, wobei das Zurückweisungssignal bewirkt, dass jeder oder einige der übertragenden Knoten die Zeitspanne vermindert bzw. vermindern, innerhalb welcher jeder der übertragenden Knoten versucht, den empfangenden Knoten zu erreichen.

20. Netzwerk nach Anspruch 18, wobei der Fairness-Algorithmus die Priorität eines jeden übertragenden Knotens ermittelt und es dem übertragenden Knoten mit der höchsten Priorität erlaubt, als erstes, vor den übertragenden Knoten mit geringerer Priorität in einer hierarchischen Ordnung an den empfangenden Knoten zu übertragen.

21. Netzwerk nach einem der Ansprüche 18 bis 20, wobei das Zurückweisungssignal über eine zugeordnete Nachrichtenkanal-Wellenlänge gesendet wird.

22. Netzwerk nach einem der vorangehenden Ansprüche, welches für wenigstens einen Knoten oder an jedem Knoten Mittel zur Implementierung einer Service-Qualitätsanforderung, Quality-of-Service (QoS), umfasst.

23. Netzwerk nach Anspruch 22, wobei an einem Knoten Entscheidungsmittel zur Priorisierung von Daten vorgesehen sind, welche von diesem Knoten über eine zu übertragende Wellenlänge auf den Netzwerkring übertragen werden sollen, damit die QoS-Anforderungen eingehalten werden.

24. Netzwerk nach Anspruch 22 oder 23, welcher Mittel umfasst, um - während einer übertragenen Wellenlänge von Daten einer bestimmten QoS an einen Knoten - diese Daten übertragende Wellenlänge abzubrechen, wenn dieser Knoten Daten mit einer höheren QoS zur Übertragung an diesen Knoten erfasst.

25. Netzwerk nach einem der vorangehenden Ansprüche, wobei ein optischer Kanalmonitor zum Einsatz kommt, um die an dem Eingang eines beliebigen Knotens aktiven Wellenlängen zu erfassen.

26. Netzwerk nach Anspruch 24, welches ferner ein Filtermittel umfasst, das einen geringen Prozentsatz der zu übertragenden Wellenlänge abfallen lässt, um die Wellenlängenaktivität in dem Netzwerkring optisch zu überwachen.

27. Netzwerk nach einem der vorangehenden Ansprüche, wobei ein Arrayed-Waveguide, AWG, sowie Photodioden zur Erfassung der am Eingang eines beliebigen Knotens aktiven Wellenlängen zum Einsatz kommen.

28. Netzwerk nach einem der vorangehenden Ansprüche, wobei das Vorhandensein oder das Fehlen von Tönen mit Radiofrequenz, RF, zur Erfassung der am Eingang eines beliebigen Knotens aktiven Wellenlängen verwendet wird.

29. Netzwerk nach einem der vorangehenden Ansprüche, wobei ein Frequenzmodulationssignal, FSK, oder ein anderes bandexternes Signal verwendet wird, um Information zu übermitteln, welche Wellenlängen in dem Netzwerk gegenwärtig aktiv sind, und um andere Steuerinformationen zu übertragen.

30. Netzwerk nach einem der vorangehenden Ansprüche, wobei die hinzugefügte Wellenlänge eines beliebigen Knotens nicht eine solche Wellenlänge ist, welche am Eingang des Knotens erfasst worden ist.

31. Verteiltes Netzwerk mit Lambda, gerouteten, DLR, Wellenlängen nach einem der vorangehenden Ansprüche.

32. Verfahren zur Steuerung von Datenverkehr für die Übertragung von Wellenlängen in einem Lichtleiter-Netzwerk mit gerouteten Wellenlängen, welches die folgenden Schritte umfasst:
- Bereitstellen einer Mehrzahl an Knoten (120) auf einem Netzwerkring, wobei jeder Knoten eine Wellenlänge entfernen und hinzufügen kann;
- Steuern der auf den Netzwerkring zu übertragenden Wellenlänge;
**gekennzeichnet durch** die Schritte, dass
- es jedem Knoten (120) ermöglicht wird, eine Wellenlänge auf den Netzwerkring zu übertragen; und
- wenigstens ein Knotens (120) der Mehrzahl an Knoten mit Sätzen von Datenpaketen bereitgestellt wird, welche in einem Megapaket gebündelt an einen verfügbaren Wellenlängenkanal ausgesendet und auf den Netzwerkring übertragen werden, wobei das Megapaket einen am Anfang des Megapaketes platzierten, einleitenden Datensatz sowie eine am Ende des Megapaketes platzierte Schlussmarkierung umfasst, welche die Information trägt, ob das Megapaket Teil eines abgebrochenen Megapaketes ist oder nicht, wodurch Kollisionen von Wellenlängen mit übertragenen Wellenlängen anderer Knoten (120) in dem Netzwerk vermieden werden.

33. Verfahren nach Anspruch 32, welches den weiteren Schritt des Betriebs von wenigstens einem Knoten in einem asynchronen Modus mit wenigstens einem oder sämtlichen anderen Knoten in dem Netzwerk umfasst.

34. Verfahren nach Anspruch 32 oder 33, welches den Schritt des Einbeziehens einer Verzögerung zwischen der Erfassung von aktiven Wellenlängen am Eingang des Knotens und der Übertragung von Wellenlängen am Ausgang des Knotens umfasst.

35. Verfahren nach Anspruch 34, welches den Schritt des Routens der übertragenen Wellenlänge durch einen Verzögerungsmechanismus umfasst, nachdem sie an dem Knoten erfasst worden ist und bevor eine Entscheidung gefällt wird, dem Netzwerk eine neue zu übertragende Wellenlänge hinzuzufügen.

36. Verfahren nach einem der Ansprüche 32 bis 25, welches den Schritt des kontinuierlichen Überwachens der verfügbaren Wellenlängenkapazität an jedem Knoten in dem Netzwerk umfasst.

37. Verfahren nach Anspruch 36, welches den Schritt des Steuerns der von dem Knoten zu übertragenden Wellenlänge während einer durch den Verzögerungsmechanismus ausgelösten Verzögerungsdauer umfasst.

38. Verfahren nach einem der Ansprüche 32 bis 37, welches die Schritte des Erfassens der Anzahl an übertragenden Knoten an einem empfangenden Knoten, welche versuchen, mit dem empfangenden Knoten zu kommunizieren, sowie des Bestimmens umfasst, ob der empfangenden Knoten im Stande ist, sämtliche zu übertragenden Wellenlängen von diesen übertragenden Knoten zu empfangen.

39. Verfahren nach Anspruch 38, welches den Schritt des Implementierens eines Fairness-Algorithmus' zur Bandbreitenverteilung in dem Netzwerk umfasst, wenn der empfangende Knoten nicht im Stande ist, sämtliche zu übertragende Wellenlängen von den übertragenden Knoten zu empfangen.

40. Verfahren nach Anspruch 37 oder 38, welches den Schritt des Sendens eines Zurückweisungssignals als Antwort auf den Fairness-Algorithmus von dem empfangenden Knoten an die übertragenden Knoten umfasst.

41. Verfahren nach Anspruch 40, welches den Schritt umfasst, wonach das Zurückweisungssignal bewirkt, dass jeder oder einige der übertragenden Knoten die Zeitspanne vermindert bzw. vermindern, innerhalb welcher jeder der übertragenden Knoten versucht, den empfangenden Knoten zu erreichen.

42. Verfahren nach einem der Ansprüche 32 bis 41, welches das Implementieren einer Service-Qualitätsanforderung, Quality-of-Service (QoS), für wenigstens einen oder für sämtliche Knoten in dem Netzwerk umfasst.

43. Verfahren nach Anspruch 42, welches den Schritt des Entscheidens über eine Priorisierung von Daten an einem Knoten umfasst, welche von diesem Knoten über eine zu übertragende Wellenlänge auf den Netzwerkring übertragen werden sollen, damit die QoS-Anforderungen eingehalten werden.

44. Computerprogramm, welches Programmanweisungen umfasst, um zu bewirken, dass ein Computer das Verfahren nach einem der Ansprüche 32 bis 43 ausführt, wenn das Programm hierauf läuft.

45. Computerprogramm nach Anspruch 44, welches auf einem Speichermedium verkörpert ist.

46. Computerprogramm nach Anspruch 44, welches auf einem Trägersignal verkörpert ist.

47. Computerprogramm nach Anspruch 44, welches auf einem Nur-Lese-Speicher (ROM) verkörpert ist.

## Revendications

1. Réseau routé de longueur d'onde à fibres optiques comprenant :
une pluralité de noeuds (120) sur un anneau de réseau où chaque noeud est adapté pour supprimer et ajouter une longueur d'onde ;
des moyens de contrôle (160) pour contrôler la longueur d'onde devant être émise sur l'anneau de réseau ;
**caractérisé par** des moyens d'accès pour chaque noeud (120) pour permettre à un noeud d'émettre la longueur d'onde sur l'anneau de réseau ; et
par au moins un noeud de la pluralité de noeuds (120) qui est destiné à fournir des lots de données par paquets envoyés sur un canal de longueur d'onde disponible dans une rafale de méga-paquets transmise sur l'anneau de réseau, ledit méga-paquet comprenant un ensemble de données de préambule placé à l'avant dudit méga-paquet, et une sentinelle de fin placée à l'arrière du méga-paquet acheminant les informations si le méga-paquet fait partie ou non d'un méga-paquet abandonné, moyennant quoi des collisions de longueur d'onde avec la longueur d'onde d'émission depuis d'autres noeuds (120) sont évitées dans le réseau.

2. Réseau selon la revendication 1, où au moins un noeud de la pluralité de noeuds (120) est adapté pour fonctionner dans un mode asynchrone avec au moins un ou la totalité des autres noeuds dans le réseau.

3. Réseau selon la revendication 1 ou 2, dans lequel chaque noeud (120) fournit un retard entre la détection de longueurs d'onde actives à l'entrée du noeud et l'émission de longueurs d'onde à la sortie du noeud (120).

4. Réseau selon la revendication 3, dans lequel les longueurs d'onde d'émission sont routées par l'intermédiaire d'un mécanisme de retard (140) après être détectées au niveau du noeud et avant qu'une décision soit prise d'ajouter une nouvelle longueur d'onde d'émission au réseau.

5. Réseau selon l'une quelconque des revendications précédentes, dans lequel est fournie une unité de contrôle (160) associée à chaque noeud (120) comprenant des moyens de surveillance pour surveiller la capacité de longueur d'onde disponible dans le réseau.

6. Réseau selon la revendication 5, dans lequel l'unité de contrôle (160) comprend des moyens de traitement pour contrôler l'émission de longueur d'onde depuis le noeud (120) et ledit contrôle est effectué pendant une période de retard introduite par ledit mécanisme de retard (140).

7. Réseau selon la revendication 5 ou 6, dans lequel ladite unité de contrôle (160) comprend des moyens de traitement pour décider quelle longueur d'onde émettre et le temps de commutation pour configurer la longueur d'onde d'émission.

8. Réseau selon l'une quelconque des revendications 5 à 7, dans lequel ladite unité de contrôle (160) au niveau d'un premier noeud (120) est adaptée pour déterminer si des longueurs d'onde d'émission en amont au niveau d'un second noeud dans le réseau émettent toujours et comprend des moyens pour abandonner des longueurs d'onde d'émission depuis ledit premier noeud (120) jusqu'à ce que l'émission de longueurs d'onde au niveau dudit second noeud soit terminée.

9. Réseau selon la revendication 8, dans lequel ledit premier noeud (120) comprend des moyens pour émettre (150) des longueurs d'onde à des longueurs d'onde différentes desdites longueurs d'onde d'émission depuis ledit second noeud pendant la période où ledit second noeud émet.

10. Réseau selon l'une quelconque des revendications précédentes, comprenant des moyens pour détecter la longueur d'onde qui est utilisée à l'entrée de tout noeud (120) dans le réseau.

11. Réseau selon l'une quelconque des revendications précédentes, dans lequel un canal de maintenance est ajouté à l'anneau de réseau par chaque noeud (120) .

12. Réseau selon l'une quelconque des revendications précédentes, où la puissance de sortie d'un canal d'émission pour émettre des longueurs d'onde différentes est configurée pour s'adapter à la perte de puissance du réseau vers un noeud de destination particulier.

13. Réseau selon l'une quelconque des revendications précédentes, où un laser accordable (320) est utilisé comme la longueur d'onde d'émission.

14. Réseau selon la revendication 13, où la sortie du laser accordable (320) est occultée pendant la commutation de sorte qu'aucun autre canal de longueur d'onde ne subisse l'effet de la longueur d'onde changeante du laser.

15. Réseau selon l'une quelconque des revendications précédentes, où un réseau de lasers de longueur d'onde fixe est utilisé pour générer la longueur d'onde d'ajout pour chaque noeud.

16. Réseau selon l'une quelconque des revendications précédentes avec un noeud recevant des longueurs d'onde d'émission comprenant des moyens pour détecter le nombre de noeuds émetteurs essayant de communiquer avec ledit noeud récepteur et des moyens pour déterminer si ledit noeud récepteur est capable de recevoir toutes les longueurs d'onde d'émission en provenance desdits noeuds émetteurs.

17. Réseau selon la revendication 16, comprenant des moyens pour mettre en oeuvre un algorithme d'équité pour l'allocation de bande passante dans le réseau lorsque ledit noeud récepteur est incapable de recevoir toutes les longueurs d'onde d'émission en provenance desdits noeuds émetteurs.

18. Réseau selon la revendication 16 ou 17, dans lequel un signal de report peut être envoyé en réponse audit algorithme d'équité dudit noeud récepteur auxdits noeuds émetteurs.

19. Réseau selon la revendication 18, dans lequel ledit signal de report amène chacun ou certains desdits noeuds émetteurs à réduire la durée pendant laquelle chacun desdits noeuds émetteurs essaie d'accéder audit noeud récepteur.

20. Réseau selon la revendication 18, dans lequel ledit algorithme d'équité détermine la priorité de chacun desdits noeuds émetteurs et autorise le noeud émetteur avec la priorité la plus élevée à émettre d'abord vers le noeud récepteur avant les noeuds émetteurs de priorité inférieure dans un ordre hiérarchique.

21. Réseau selon l'une quelconque des revendications 18 à 20, dans lequel ledit signal de report est envoyé sur une longueur d'onde de canal de messagerie dédié.

22. Réseau selon l'une quelconque des revendications précédentes, comprenant des moyens pour au moins un noeud ou au niveau de chaque noeud pour mettre en oeuvre une exigence de qualité de service, QoS.

23. Réseau selon la revendication 22, dans lequel des moyens de décision sont fournis au niveau d'un noeud pour prioriser des données devant être transmises sur l'anneau de réseau sur une longueur d'onde d'émission depuis ledit noeud afin de maintenir les exigences de QoS.

24. Réseau selon la revendication 22 ou 23, comprenant des moyens pendant la longueur d'onde d'émission de données d'une QoS particulière au niveau d'un noeud pour abandonner ladite longueur d'onde d'émission de données lorsque ledit noeud détecte des données pour la transmission au niveau dudit noeud ayant une exigence de QoS supérieure.

25. Réseau selon l'une quelconque des revendications précédentes, dans lequel un moniteur de canal optique est utilisé pour détecter les longueurs d'onde actives à l'entrée de tout noeud.

26. Réseau selon la revendication 24, comprenant en outre un moyen de filtre qui élimine un petit pourcentage de la longueur d'onde d'émission pour surveiller optiquement l'activité de longueur d'onde dans le réseau en anneau.

27. Réseau selon l'une quelconque des revendications précédentes, où des guides d'ondes en réseau, AWG, et des photodiodes sont utilisés pour détecter les longueurs d'onde actives à l'entrée de tout noeud.

28. Réseau selon l'une quelconque des revendications précédentes, dans lequel la présence ou l'absence de tonalités radiofréquence, RF, est utilisée pour détecter les longueurs d'onde actives à l'entrée de tout noeud.

29. Réseau selon l'une quelconque des revendications précédentes, où un signal modulé par déplacement de fréquence, FSK, ou un autre signal hors bande, est utilisé pour véhiculer des informations sur quelles longueurs d'onde sont actuellement actives dans le réseau et transmettre d'autres informations de contrôle.

30. Réseau selon l'une quelconque des revendications précédentes, où la longueur d'onde d'ajout de tout noeud n'est pas une longueur d'onde détectée à l'entrée du noeud.

31. Réseau routé lambda de longueur d'onde distribué, DLR, selon l'une quelconque des revendications précédentes.

32. Procédé destiné à contrôler des données de trafic pour l'émission de longueur d'onde dans un réseau routé de longueur d'onde à fibres optiques comprenant les étapes consistant à :
fournir une pluralité de noeuds (120) sur un anneau de réseau où chaque noeud peut supprimer et ajouter une longueur d'onde ;
contrôler la longueur d'onde devant être émise sur l'anneau de réseau ; et
**caractérisé par** les étapes consistant à permettre à chaque noeud (120) d'émettre la longueur d'onde sur l'anneau de réseau ; et
fournir à au moins un noeud de la pluralité de noeuds (120) des lots de données par paquets envoyés sur un canal de longueur d'onde disponible dans une rafale de méga-paquets transmise sur l'anneau de réseau, ledit méga-paquet comprenant un ensemble de données de préambule placé à l'avant dudit méga-paquet, et une sentinelle de fin placée à l'arrière du méga-paquet acheminant les informations si le méga-paquet fait partie ou non d'un méga-paquet abandonné, moyennant quoi des collisions de longueur d'onde avec la longueur d'onde d'émission depuis d'autres noeuds (120) sont évitées dans le réseau.

33. Procédé selon la revendication 32, comprenant l'étape supplémentaire consistant à faire fonctionner au moins un noeud dans un mode asynchrone avec au moins un ou la totalité des autres noeuds dans le réseau.

34. Procédé selon la revendication 32 ou 33, comprenant l'étape consistant à introduire un retard entre la détection de longueurs d'onde actives à l'entrée du noeud et l'émission de longueurs d'onde à la sortie du noeud.

35. Procédé selon la revendication 34, comprenant l'étape consistant à router la longueur d'onde d'émission par l'intermédiaire d'un mécanisme de retard après être détectée au niveau du noeud et avant qu'une décision soit prise d'ajouter une nouvelle longueur d'onde d'émission au réseau.

36. Procédé selon l'une quelconque des revendications 32 à 35, comprenant l'étape consistant à surveiller au niveau de chaque noeud en continu la capacité de longueur d'onde disponible dans le réseau.

37. Procédé selon la revendication 36, comprenant l'étape supplémentaire consistant à contrôler l'émission de longueur d'onde depuis le noeud pendant une période de retard introduite par ledit mécanisme de retard.

38. Procédé selon l'une quelconque des revendications 32 à 37, comprenant les étapes consistant à détecter au niveau d'un noeud récepteur le nombre de noeuds émetteurs essayant de communiquer avec ledit noeud récepteur et déterminer si ledit noeud récepteur est capable de recevoir toutes les longueurs d'onde d'émission en provenance desdits noeuds émetteurs.

39. Procédé selon la revendication 38, comprenant l'étape consistant à mettre en oeuvre un algorithme d'équité pour l'allocation de bande passante dans le réseau lorsque ledit noeud récepteur est incapable de recevoir toutes les longueurs d'onde d'émission en provenance desdits noeuds émetteurs.

40. Procédé selon la revendication 37 ou 38, comprenant l'étape consistant à envoyer un signal de report en réponse audit algorithme d'équité dudit noeud récepteur auxdits noeuds émetteurs.

41. Procédé selon la revendication 40, comprenant l'étape consistant à amener ledit signal de report de chacun ou certains desdits noeuds émetteurs à réduire la durée pendant laquelle chacun desdits noeuds émetteurs essaie d'accéder audit noeud récepteur.

42. Procédé selon l'une quelconque des revendications 32 à 41, comprenant la mise en oeuvre d'un moyen d'exigence de qualité de service, QoS, pour au moins un ou chaque noeud dans le réseau.

43. Procédé selon la revendication 42, comprenant l'étape consistant à décider au niveau d'un noeud de prioriser des données devant être transmises sur l'anneau de réseau sur une longueur d'onde d'émission depuis ledit noeud afin de maintenir les exigences de QoS.

44. Programme informatique comprenant des instructions de programme pour amener, lorsque exécuté sur un ordinateur, à effectuer le procédé selon l'une quelconque des revendications 32 à 43.

45. Programme informatique selon la revendication 44, incorporé sur un support d'enregistrement.

46. Programme informatique selon la revendication 44, incorporé sur un signal porteur.

47. Programme informatique selon la revendication 44, incorporé sur une mémoire morte.
